(19) Europäisches Patentamt
European Patent Office
Office européen des brevets

(11) EP 3 004 421 B1

(12) # FASCICULE DE BREVET EUROPEEN

(45) Date de publication et mention de la délivrance du brevet:
**16.01.2019 Bulletin 2019/03**

(21) Numéro de dépôt: **14731716.8**

(22) Date de dépôt: **23.05.2014**

(51) Int Cl.:
***C23F 11/10*** (2006.01) ***C09K 8/54*** (2006.01)
***C09K 8/74*** (2006.01) ***C23F 11/14*** (2006.01)
***E21B 41/02*** (2006.01) ***C07D 251/04*** (2006.01)

(86) Numéro de dépôt international:
**PCT/FR2014/051218**

(87) Numéro de publication internationale:
**WO 2014/191666 (04.12.2014 Gazette 2014/49)**

(54) **FORMULATIONS ANTI-CORROSION STABLES AU STOCKAGE**

LAGERSTABILE ANTIKORROSIVE FORMULIERUNGEN

ANTI-CORROSION FORMULATIONS THAT ARE STABLE DURING STORAGE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **27.05.2013 FR 1354750**

(43) Date de publication de la demande:
**13.04.2016 Bulletin 2016/15**

(73) Titulaire: **ARKEMA FRANCE**
**92700 Colombes (FR)**

(72) Inventeurs:
- **POU, Tong, Eak**
  **F-69540 Irigny (FR)**
- **DEVAUX, Jean François**
  **69510 Soucieu en Jarrest (FR)**

(74) Mandataire: **Albani, Dalila**
**ARKEMA France**
**Département Propriété Industrielle**
**420, rue d'Estienne d'Orves**
**92705 Colombes Cedex (FR)**

(56) Documents cités:
**EP-A1- 2 267 098**
**WO-A1-94/08980**
**WO-A1-98/41673**
**WO-A1-2013/038100**
**US-A- 4 578 208**
**US-A- 5 744 024**
**US-A1- 2010 261 623**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

EP 3 004 421 B1

## Description

La présente invention concerne les compositions inhibitrices de corrosion des métaux utilisées dans l'industrie pétrolière et gazière, et plus spécifiquement dans tout type d'industrie de forage, complétion, stimulation et de production de minerais ou de composés fossiles, tels que gaz, pétrole, bitume et autres.

De telles compositions inhibitrices de corrosion sont déjà largement connues et les plus efficaces d'entre elles comprennent le plus souvent un ou plusieurs dérivés soufrés, notamment choisis parmi les mercapto-alcools et les mercapto-acides. Ainsi, les demandes WO 1998/041673, WO 2013/034846 et WO 2013/038100 décrivent des compositions inhibitrices de corrosion où l'addition de dérivés soufrés, par exemple d'acide thioglycolique, permet d'augmenter la performance desdites compositions inhibitrices.

Cependant, il a été observé que les compositions inhibitrices de corrosion comprenant un ou plusieurs dérivés soufrés, tels que ceux définis ci-dessus, et en particulier l'acide thioglycolique, sont peu stables au stockage, et ont tendance à développer des odeurs nauséabondes et non désirées.

Ces odeurs nauséabondes sont probablement dues à la décomposition des dérivés soufrés, et, sans être lié par la théorie, on pense aujourd'hui que les dérivés soufrés se décomposent probablement en partie en sulfure d'hydrogène ($H_2S$) à la température de stockage. Plus la température de stockage est élevée plus la décomposition des dérivés soufrés, et en particulier lorsqu'il s'agit d'acide thioglycolique, est importante. Ce phénomène de décomposition rend ainsi ces compositions inhibitrices de corrosion peu utilisables en raison des odeurs désagréables qui s'en dégagent, voire dangereuses pour les utilisateurs. En effet, le sulfure d'hydrogène est toxique, même à très faibles concentrations dans l'air.

L'industrie gazière et pétrolière utilise déjà certains composés dits capteurs d'$H_2S$ (« $H_2S$ scavengers » en langue anglaise) où ils sont principalement mis en oeuvre par injection dans les conduites de gaz, de pétrole brut ou d'eau ou fluides aqueux, afin de capter (piéger, ou encore neutraliser) les espèces acides présentes dans lesdites conduites.

Ces espèces acides sont principalement dues à la présence d'humidité et de gaz dits « acides », tels que par exemple le sulfure d'hydrogène ($H_2S$) et le dioxyde de carbone ($CO_2$) en présence d'$H_2S$.

Dans ce domaine, il est aujourd'hui communément établi de classer les capteurs d'$H_2S$ dans deux grandes familles, les capteurs régénérateurs (« regenerative $H_2S$ scavengers » en langue anglaise) et les capteurs non-régénérateurs (« non-regenerative $H_2S$ scavengers » en langue anglaise).

Parmi les capteurs d'$H_2S$ régénérateurs, on peut citer par exemple les alcanolamines comme la mono-éthanolamine, la di-éthanolamine ou encore la méthyléthanolamine.

Parmi les capteurs d'$H_2S$ dits « non-régénérateurs », on peut citer par exemple les triazines et leurs dérivés, les oxydants comme le dioxyde de chlore, les hypochlorites (par exemple eau de Javel), le peroxyde d'hydrogène, les sels de métaux de transition, (tels les sels de fer, cobalt, nickel, chrome, cuivre, zinc, manganèse, et autres), ou encore les aldéhydes, comme le formaldéhyde et le glyoxal.

Il pourrait ainsi être envisagé d'utiliser de tels capteurs d'$H_2S$ pour piéger les sulfures résultant de la décomposition des dérivés soufrés présents dans les compositions inhibitrices de corrosion. Cependant la plupart des capteurs régénérateurs et des capteurs non-régénérateurs soufrent de nombreux inconvénients qui rendent leur utilisation dans les compositions inhibitrices de corrosion peu adaptée.

Ainsi, les dérivés aminés, et en particulier les alcanolamines ne sont pas assez efficaces pour éliminer l'$H_2S$ issu de la dégradation de l'acide thioglycolique. Les oxydants, comme le dioxyde de chlore, l'eau de Javel, ou l'eau oxygénée sont difficilement utilisables en raison de leur corrosivité, qui va à l'encontre du but recherché. En outre, la formation de solides insolubles avec certains de ces capteurs d'$H_2S$ et l'acide thioglycolique dans les formulations anti-corrosion, rend ces formulations impropres à l'utilisation, tout risque de bouchage et colmatage des canalisations et des tubes d'injection devant être impérativement évité. Par ailleurs les aldéhydes, comme le formaldéhyde et le glyoxal, sont toxiques et on cherche à minimiser, voire éviter leurs utilisations.

Ainsi un objectif de la présente invention est-elle la mise à disposition de formulations anti-corrosion comprenant au moins un dérivé soufré et qui sont stables au stockage, c'est-à-dire qui ne génèrent pas ou peu de mauvaises odeurs dans le temps. Un autre objectif de la présente invention est la mise à disposition de formulations anti-corrosion stables particulièrement adaptées et efficaces pour la prévention et le traitement de la corrosion dans le domaine de l'extraction pétrolière, gazière et de minerais en général.

Un autre objectif de l'invention est la mise à disposition de formulations anti-corrosion stables, adaptées et efficaces pour la prévention et le traitement de la corrosion dans le domaine de l'extraction pétrolière, gazière et de minerais, lesdites formulations étant non-toxiques ou peu toxiques, c'est-à-dire ne comportant pas ou peu de composés qui pourraient s'avérer toxiques, nocifs et/ou néfastes pour l'environnement, ou ne se décomposant pas en composés toxiques, nocifs et/ou néfastes pour l'environnement lors du stockage desdites formulations au cours du temps.

Les inventeurs ont maintenant découvert que les objectifs précités sont atteints en totalité ou au moins en partie grâce aux formulations selon la revendication 1. D'autres objectifs encore apparaîtront dans cette même description.

Parmi les capteurs d'$H_2S$ précités déjà disponibles sur le marché, il a en effet été découvert que certaines triazines et certains de leurs dérivés sont aptes à stabiliser des formulations inhibitrices de corrosion comprenant au moins un composé soufré. L'addition d'au moins un composé porteur d'au moins un motif triazine dans une formulation anti-corrosion confère non seulement une excellente stabilité au stockage à ladite formulation, sans dégagement de mauvaises odeurs, sans dépôt, mais aussi sans perturber et sans modifier l'efficacité anti-corrosion de ladite formulation. En outre, et de manière tout à fait surprenante, il a été observé que l'activité anti-corrosion d'une formulation peut être substantiellement améliorée lorsqu'elle est additionnée d'au moins un composé porteur d'au moins un motif triazine.

Ceci est d'autant plus surprenant que la littérature fournit de nombreux documents (cf. par exemple les brevets US2010261623, US5744024, EP2267098 US5554349 et US4978512) mentionnant l'utilisation de dérivés de triazine comme capteur d'$H_2S$ par injection directe dans les conduites pétrolières ou gazières, cependant aucun d'entre eux ne fait mention de la présence de triazine (ou dérivé) parmi les composants de formulations inhibitrices de corrosion comprenant au moins un composé soufré tel que définie dans la revendication 1, par exemple l'acide thioglycolique, et aucun d'entre eux ne fait mention de formulations inhibitrices de corrosion comprenant au moins un composé soufré tel que définie dans la revendication 1 et au moins une triazine (ou dérivé) afin de rendre stables au stockages lesdites formulations, sans en altérer l'efficacité anti-corrosion.

Ainsi, et selon un premier aspect, la présente invention concerne une formulation inhibitrice de corrosion comprenant :

a) au moins une amine ou dérivé d'amine,
b) au moins un composé soufré choisi parmi les composés porteurs d'au moins un groupement-SH et d'au moins un groupement acide carboxylique (-COOH) et/ou alcool (-OH), et
c) au moins un composé porteur d'au moins un motif triazine.

La formulation inhibitrice de corrosion peut en outre comprendre éventuellement un composant d) qui est un solvant ou un mélange de deux ou plusieurs solvants, le ou les solvants étant de préférence choisis parmi l'eau et les solvants organiques hydrosolubles, et en particulier les solvants organiques de type alcools et/ou glycols.

De manière générale :

- le composant a) représente de 50% à 90% en poids, de préférence de 55% à 85% en poids, de préférence encore de 55% à 75% en poids, bornes incluses, par rapport au poids total des composants a) + b) + c),
- le composant b) représente de 1% à 30% en poids, de préférence de 2% à 20% en poids, de préférence encore de 5% à 10% en poids, bornes incluses, par rapport au poids total des composants a) + b) + c),
- le composant c) représente de 0,5% à 15% en poids, de préférence de 0,5% à 10% en poids, de préférence encore de 1% à 5%, bornes incluses, par rapport au poids total des composants a) + b) + c),
- le composant d) représente de 0% à 60% en poids, de préférence de 20% à 60% en poids, de préférence encore de 30% à 60% en poids, bornes incluses, par rapport au poids total des composants a) + b) + c) + d).

Ainsi les formulations inhibitrices de corrosion de l'art antérieur, et à titre d'exemples non limitatifs celles décrites dans les demandes WO 1998/041673, WO 2013/034846, WO 2013/038100, US 5853619 et WO 2001/12878, auxquelles au moins un composé porteur d'au moins un motif triazine est ajouté, font partie de la présente invention.

Les composants a) des formulations de la présente invention sont les amines ou dérivés d'amine communément utilisés comme inhibiteurs de corrosion dans l'industrie pétrolière et gazière. Parmi ces composants a), on peut citer à titre d'exemples non limitatifs les amines éthoxylées, les imidazolines, ainsi que leurs dérivés et leurs sels, et en particulier alkyl-imidazo-polyéthylène-amines décrites dans la demande WO 1998/041673, les carboxylates d'imidazoline-amines décrits dans la demande WO 2010/031963, les alkylimidazolines quaternaires, les alkylimidazolines alcoxylées, les amines grasses, les dérivés d'amines grasses (amino-acides, amino-alcools, amido-amines, ammoniums, ammoniums quaternaires, les pyridines et dérivés, tels que par exemple les pyridiniums, les quinolines et dérivés, tels que par exemple les quinoliniums), les imidazolines substituées par au moins une chaîne grasse, les ester-amines, les éther-amines décrites dans la demande WO 2013/034846, ou encore la MOPA (méthoxy-3-propylamine), l'EDIPA (N,N-di-*iso*-propyléthylamine), les alkylamines décrites dans la demande WO 2013/038100, ainsi que les amines oxy-alkylées (par exemple oxy-éthylées et/ou oxy-propylées et/ou oxy-butylées) tel que par exemple le Noramox® commercialisé par la société CECA S.A, les bétaïnes et alkylbétaïnes, ainsi que les dérivés N-oxydes des amines précitées.

Les composés soufrés b) des formulations selon la présente invention sont choisis parmi les composés porteur d'au moins un groupement -SH et d'au moins un groupement acide carboxylique (-COOH) et/ou alcool (-OH). Le composé b) est choisi parmi les composés porteurs i) d'au moins un groupement mercapto (-SH) et d'au moins un groupement acide carboxylique et ii) d'au moins un groupement mercapto (-SH) et d'au moins un groupement alcool.

Selon un aspect tout particulièrement préféré, le composé b) est choisi parmi le mercapto-éthanol, le mercapto-propanol, l'acide thioglycolique, l'acide mercapto-acétique, l'acide mercaptopropionique, pour ne citer que les plus aisément disponibles d'entre eux, l'acide thioglycolique étant tout particulièrement préféré.

Comme indiqué précédemment, les formulations inhibitrices de corrosion connues à ce jour et qui contiennent au moins un composé soufré, en particulier celles contenant de l'acide thioglycolique, se sont souvent montrées instables dans le temps (notamment lors d'un test de stockage à 60°C, pendant 8 jours), dans la mesure où elles s'accompagnaient d'une forte odeur qui pouvait être liée à un dégagement important d'$H_2S$ (supérieur à 2000 ppm). En raison de ce fort dégagement d'$H_2S$ gazeux et de la toxicité de ce gaz, ces formulations inhibitrices de corrosion ne sont pas utilisables sans protection adaptée.

Ainsi, l'ajout du composant c) dans ces formulations permet une meilleure stabilité dans le temps, et une absence quasi-totale de dégagement de mauvaise odeur, en particulier une absence quasi-totale de dégagement d'$H_2S$.

Le composant c) est au moins un composé porteur d'au moins un motif triazine. Par « composé porteur d'au moins un motif triazine », on entend les composés comportant au moins un, et de préférence un seul, motif triazine. Selon un mode de réalisation préféré de l'invention, ledit motif triazine est de préférence un motif hexahydrotriazine. Selon un autre mode de réalisation préféré, ledit motif triazine est de préférence un motif 1,3,5-triazine. Selon encore un autre mode de réalisation préféré, ledit motif triazine est de préférence un motif 1,3,5-hexahydrotriazine. Il doit être également compris que le motif triazine peut être substitué comme indiqué plus loin dans la description.

Parmi les composés porteurs d'au moins un motif triazine, on préfère notamment les composés de formule (1) suivante :

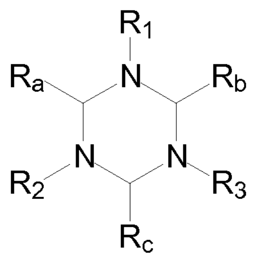

(1)

dans laquelle :

- $R_1$, $R_2$ et $R_3$, identiques ou différents, sont choisis indépendamment les uns des autres parmi l'atome d'hydrogène, un radical alkyle linéaire ou ramifié comportant de 1 à 6 atomes de carbone et éventuellement substitué par un ou plusieurs motifs choisis parmi hydroxy (-OH) et alkoxy (-OR), où R représente radical alkyle linéaire ou ramifié comportant de 1 à 6 atomes de carbone, et
- $R_a$, $R_b$ et $R_c$, identiques ou différents, sont choisis indépendamment les uns des autres parmi l'atome d'hydrogène, et un radical alkyle linéaire ou ramifié comportant de 1 à 6 atomes de carbone.

Par « radical alkyle linéaire ou ramifié », on entend de préférence les radicaux méthyle, éthyle, n-propyle, 2-éthylméthyle, *iso*-propyle, n-butyle, *iso*-butyle, *tert*-butyle, n-pentyle, *iso*-pentyle, *tert*-pentyle, et les radicaux hexyles linéaire ou ramifiés, de préférence encore les radicaux méthyle, éthyle, n-propyle, 2-éthylméthyle, *iso*-propyle, n-butyle, *iso*-butyle, *tert*-butyle.

Les composés de formule (1) sont connus et disponibles dans le commerce ou bien facilement préparés à partir de modes opératoires connus et disponibles dans la littérature scientifique, dans la littérature brevets, dans les Chemical Abstracts ou encore sur l'internet. Ainsi les composés de formule (1) peuvent être préparés par réaction d'une ou plusieurs amines avec un ou plusieurs aldéhydes, comme par exemple décrit dans le brevet US 5554349.

Parmi les composés de formule (1), on préfère ceux pour lesquels $R_a$, $R_b$ et $R_c$ représentent chacun l'atome d'hydrogène. On préfère également les composés de formule (A) pour lesquels $R_1$, $R_2$ et $R_3$ ne sont pas des atomes d'hydrogène. Selon un autre mode de réalisation de l'invention, on préfère les composés de formule (1) pour lesquels $R_1$, $R_2$ et $R_3$ sont identiques. On préfère en outre les composés de formule (1) pour lesquels $R_1$, $R_2$ et $R_3$ sont identiques et sont chacun choisis parmi le radical méthyle, le radical éthyle, le radical propyle, le radical hydroxy-éthyle et le radical méthoxypropyle, et de préférence encore $R_1$, $R_2$ et $R_3$ sont identiques et représentent chacun le radical méthyle.

Des exemples particulièrement préférés de composés de formule (1) sont la 1,3,5-triméthylhexahydrotriazine (N° CAS 108-74-7), la 1,3,5-tris(hydroxyéthyl)-hexahydrotriazine (N° CAS 4719-04-04), et la 1,3,5-tri(méthoxypropyl)hexahydrotriazine (N° CAS 3960-05-2).

Parmi les composants d) des formulations selon la présente invention, on peut citer, à titre d'exemples non-limitatifs l'eau et les solvants organiques, ainsi que les mélanges d'eau avec au moins un solvant organique. Les solvants organiques qui peuvent être utilisés sont de préférence des solvants organiques hydrosolubles et peuvent être par

exemple choisis parmi les alcools et les éthers et plus particulièrement parmi les alcanols et les glycols, plus particulièrement le méthanol, l'éthanol, le glycol, le monoéthylèneglycol (MEG), le diéthylèneglycol (DEG), le triéthylèneglycol (TEG), le 2-butoxyéthanol, et les mélanges de deux ou plusieurs d'entre eux en toutes proportions.

Les formulations selon la présente invention peuvent en outre comprendre un ou plusieurs autres additifs, charges, et autres, inertes vis-à-vis de l'efficacité de l'activité inhibitrice de corrosion et bien connus de l'homme du métier dans le domaine de l'extraction des hydrocarbures et autres minerais fossiles ou minéraux. Parmi ces additifs, on peut citer, de manière non limitative, les stabilisants, les conservateurs, les agents anti-U.V., les ignifugeants, les colorants, d'autres capteurs d'$H_2S$ (comme définis précédemment, tels que les aldéhydes, et par exemple et de manière non limitative le formaldéhyde ou le glyoxal) et autres. La quantité ajoutée de ce ou ces additif(s) peut varier dans de grandes proportions, selon l'effet désiré, les réglementations en vigueur, les conditions requises de solubilité, de compatibilité, et autres. En règle générale, cette quantité varie de quelques ppm en poids à quelques pourcents en poids, par rapport au poids total de la formulation de l'invention.

Selon encore un autre aspect, les compositions de la présente invention telles qu'elles viennent d'être définies peuvent être utilisées seules, en association, ou en mélange ou en formulation avec un ou plusieurs autres inhibiteurs, destinés à inhiber d'autres types de corrosion rencontrés dans le domaine de l'extraction des hydrocarbures, ou encore destinés à inhiber la formation d'hydrates ou leur agglomération, à éviter, ou empêcher l'apparition de dépôts, à éviter, ou empêcher le développement de bactéries, à favoriser l'écoulement, et autres. La quantité ajoutée de ce ou ces autres inhibiteur(s) peut varier dans de grandes proportions, selon l'effet désiré, les réglementations en vigueur, les conditions requises de solubilité, de compatibilité, et autres. En règle générale, cette quantité varie de 0,1% à 60%, généralement de 0,5% en poids à 40% en poids, de préférence de 1% à 20% en poids, par rapport au poids total de formulation. Ces proportions peuvent toutefois être différentes en fonction de l'effet inhibiteur souhaité, et par exemple, pour les inhibiteurs permettant d'éviter la formation ou l'agglomération d'hydrates, la proportion entre la masse desdits inhibiteurs d'hydrates et celle des composants a), b) et c) et éventuellement d) peut atteindre un rapport pondéral de 30 000 pour 10.

Selon un mode de réalisation de la présente invention, les formulations inhibitrices de corrosion contiennent au moins une composition anti-dépôt de minéraux, ladite composition anti-dépôt comprenant par exemple et à titre non limitatif au moins un composé choisi parmi les amino-phosphonates acides ou neutralisés, les poly(acides acryliques), les poly(acrylates d'alkyle), les copolymères à base d'acides phosphino-carboxyliques, les tanins, les lignosulfonates, les polyacrylamides, les naphtalène-sulfonates, et autres, comme par exemple décrit dans la demande WO 2013/034846.

Les formulations anti-corrosion selon l'invention peuvent être préparées par tous moyens connus, et en général par simple mélange des divers composants desdites compositions dans un ordre quelconque. Selon un aspect de la présente invention, les formulations inhibitrices de corrosion de la présente invention peuvent aisément être préparées à partir de formulations inhibitrices de corrosion connues de l'art antérieur, auxquelles est ajouté au moins un composé porteur d'au moins un motif triazine, comme décrit précédemment. En variante, on peut également préparer les formulations selon l'invention en ajoutant dans le composant d) les autres composants a), b) et c), ainsi que les éventuels additifs, dans un ordre quelconque.

Il est également possible de préparer les formulations selon l'invention à partir de formulations connues, par exemple celles décrites dans US4498997, auxquelles on ajoute au moins un composé soufré tel que décrit précédemment, pour en améliorer les performances anti-corrosion, et auxquelles on ajoute au moins un composé porteur d'au moins un motif triazine pour en améliorer la stabilité au stockage.

La quantité de composé(s) porteur d'au moins un motif triazine présente dans la formulation inhibitrice de corrosion selon la présente invention peut varier dans de grandes proportions selon la nature et la quantité des autres composants présents dans ladite formulation et est généralement comprise entre 0,5% en poids et 10% en poids, de préférence entre 0,5% et 5% en poids, par exemple environ 2% en poids, par rapport au poids total de la formulation.

Selon un mode de réalisation de l'invention, on préfère notamment les formulations dans lesquelles le nombre de moles de composé porteur d'au moins une fonction triazine, et de préférence une seule fonction triazine, est compris entre 0,2 et 0,8 moles, de préférence entre 0,3 et 0,7 moles, et tout particulièrement environ 0,5 moles, pour une mole de composé(s) soufré(s) (composant b).

Comme indiqué précédemment, l'ajout d'au moins un composé porteur d'au moins un motif triazine permet non seulement d'améliorer la stabilité au stockage d'une formulation inhibitrice de corrosion mais aussi d'en augmenter très sensiblement son pouvoir inhibiteur de corrosion.

L'addition d'au moins un composé porteur d'au moins un motif triazine non seulement fait chuter drastiquement la teneur en produits de décomposition soufrés, par exemple $H_2S$ dégagé, mais aussi elle augmente la performance anti-corrosion de l'inhibiteur en question.

Ainsi, et selon un autre aspect, la présente invention concerne l'utilisation d'au moins un composé comportant au moins un motif triazine, comme stabilisant et additif pour améliorer les performances anti-corrosion, d'une formulation inhibitrice de corrosion qui comprend au moins un dérivé soufré, tel que définie dans la revendication 1.

Selon un mode de réalisation préféré, l'invention concerne l'utilisation d'au moins un composé de formule (1) telle que définie précédemment comme additif de stabilisation et d'amélioration des propriétés anti-corrosion d'une

formulation inhibitrice de corrosion comportant au moins un dérivé soufré, tel que définie dans la revendication 1.

L'addition dans une formulation inhibitrice de corrosion d'au moins un composé porteur d'au moins un motif triazine confère à ladite formulation une excellente stabilité dans le temps caractérisée par une absence *quasi* totale de dégagement d'$H_2S$, et une amélioration substantielle des performances anti-corrosion. À titre de comparaison, ainsi qu'illustré dans les exemples qui suivent, l'addition d'une même quantité d'autres composés connus comme capteurs d'$H_2S$, tels que les aminés, par exemple la mono-éthanolamine, ou les aldéhydes, par exemple le formaldéhyde ou le glyoxal, n'ont pas d'activité satisfaisante sur la stabilité, et n'empêchent pas le dégagement dans le temps de quantités importantes d'$H_2S$.

Grâce à la présente invention, il est maintenant possible de disposer de formulations inhibitrices de corrosion comprenant un produit soufré, tel que définie précédemment, particulièrement préféré l'acide thioglycolique, qui sont stables au stockage, qui ne développent pas d'odeurs nauséabondes au stockage, qui ne dégagent pas de gaz toxique, en particulier pas d'$H_2S$. En outre, les performances anti-corrosion des formulations inhibitrices de corrosion selon l'invention sont améliorées, en comparaison avec les formulations correspondantes qui ne contiennent pas de composé(s) comportant au moins un motif triazine.

Ainsi, et selon encore un autre aspect, la présente invention concerne l'utilisation des formulations inhibitrices de corrosion selon l'invention pour le traitement, avantageusement le traitement préventif de la corrosion des conduites métalliques corrodables au contact de milieux corrosifs dans l'industrie pétrolière, gazière et minière.

En effet, lors de l'extraction des hydrocarbures (ou production des hydrocarbures), plus particulièrement lors de l'extraction de pétrole brut ou de l'extraction de gaz des couches souterraines, voire de minerais, on produit généralement simultanément avec les hydrocarbures ou les minerais, de l'eau et des gaz qui sont remontés vers la surface. La présence d'eau, en quantités plus ou moins importantes, est ainsi inhérente à l'extraction d'hydrocarbures et de minerais en sous-sol, et est à l'origine de nombreux problèmes qui viennent perturber les lignes de production.

En effet, cette présence d'eau, notamment en présence des gaz extraits, est très souvent responsable de la corrosion des tuyaux, canalisations, tubes, vannes et autres éléments métalliques. En outre, dans certains cas, cette eau est ré-injectée dans les couches souterraines comme auxiliaire d'extraction.

Les formulations inhibitrices de corrosion selon la présente invention trouvent ainsi une utilisation tout à fait avantageuse dans tous les domaines de l'industrie pétrolière et gazière, et plus spécifiquement dans tout type d'industrie de forage, complétion, stimulation et de production de minerais ou de composés fossiles, tels que gaz, pétrole, bitume et autres, tels que par exemple, et de manière non limitative dans les techniques de forage, de fracturation par injection de fluide, d'acidification des réservoirs de composés fossiles, d'injection de fluides dans les réservoirs souterrains contenant des composés fossiles, ainsi que dans les techniques de leurs productions et récupérations assistées.

Ces formulations peuvent être injectées selon toutes méthodes bien connues de l'homme du métier, en continu, en batch ou en squeeze, de préférence en continu, dans les lignes d'extraction, dans les lignes d'injection des eaux de production, et de manière générale dans tout fluide aqueux, organique ou hydro-organique mis en oeuvre dans les champs d'extraction. On peut par exemple également injecter ces formulations via le système dit « gas-lift », bien connu de l'homme du métier.

La quantité injectée de formulation(s) inhibitrice(s) de corrosion selon l'invention peut varier dans de grandes proportions, selon les besoins et la nature et la composition des produits extraits. En règle générale la quantité injectée est comprise entre 1 ppm et 1000 ppm, de préférence entre 50 ppm et 800 ppm, où « ppm » représente des parties en poids de formulation(s) inhibitrice(s) de corrosion pour un million de parties en volume de fluide aqueux, organique ou hydro-organique à traiter.

Les exemples suivants, non limitatifs, permettent d'illustrer et de mieux comprendre l'invention, sans en limiter la portée.

## EXEMPLES

### Méthodes de mesure

*Mesure de la quantité d'$H_2S$ dégagée*

Dans un flacon de 100 mL sont introduits 50 mL de formulation inhibitrice de corrosion à tester. Le flacon est fermé hermétiquement et conservé à 60°C pendant huit jours. La quantité d'$H_2S$ dégagée est ensuite mesurée en prélevant un échantillon de phase gazeuse à l'aide d'une pompe munie d'un tube Dräger. Le gaz passe à travers le tube dont le changement de couleur indique la quantité d'$H_2S$ dégagée.

*Mesure de la vitesse de corrosion*

L'efficacité anti-corrosion est exprimée sous forme de vitesse de corrosion d'un acier au carbone en fonction

du temps. La vitesse de corrosion d'un acier est déterminée par la méthode dite LPR (« Linear Polarization Résistance »). En présence d'inhibiteur de corrosion, plus la vitesse de corrosion est faible plus l'inhibiteur est efficace.

Les mesures de vitesse de corrosion par la méthode LPR sont réalisées dans les conditions suivantes : le milieu corrosif est une solution aqueuse de chlorure de sodium (NaCl) à 30 g/L. Cette solution est préalablement désaérée par barbotage d'azote, pendant au moins une heure. Elle est enfin saturée en dioxyde de carbone ($CO_2$). Le barbotage de $CO_2$ est maintenu pendant toute la durée de l'essai. La température de travail est de 80°C. Les essais sont réalisés par introduction au temps t = 100 minutes de 50 ppm (poids/volume) de formulation inhibitrice de corrosion.

L'efficacité de l'inhibiteur de corrosion est exprimée en pourcentage d'efficacité, selon la relation suivante :

$$\%\text{Eff (IC)} = \frac{[(\text{Vcor}_1) - (\text{Vcor}_2)]}{(\text{Vcor}_1)} \times 100$$

où : %Eff (IC) représente le pourcentage d'efficacité de la formulation anti-corrosion, Vcor1 représente la vitesse de corrosion en absence de formulation anti-corrosion et Vcor2 représente la vitesse de corrosion en présence de formulation anti-corrosion.

Cependant, il est d'usage courant dans le domaine de l'anti-corrosion de considérer uniquement la vitesse de corrosion résiduelle (c'est-à-dire après traitement ou après injection de la formulation anti-corrosion). Plus cette vitesse de corrosion résiduelle est faible, plus la formulation anti-corrosion est efficace. Une formulation anti-corrosion efficace, à une dose donnée, présente généralement une vitesse de corrosion résiduelle de l'acier inférieur à 0,1 mm/an.

La vitesse de corrosion de l'acier au carbone est mesurée par la méthode de mesure de résistance de polarisation, connue dans le métier, sur un système à trois électrodes : électrode de travail en acier au carbone, la contre électrode en platine et l'électrode de référence en calomel saturé.

Ces trois électrodes sont placées dans la cellule en verre double enveloppe contenant 600 mL de milieu corrosif. Ce milieu corrosif est une solution synthétique de même composition que l'eau du site où il y a corrosion. Ce milieu est saturé par barbotage de $CO_2$ tout au long de l'expérience. La température de travail est de 80°C.

Les vitesses de corrosion en absence et en présence de formulation anti-corrosion sont mesurées et suivies en fonction du temps à l'aide d'un potentiostat Gamry.

**Exemple 1 :** Tests basés sur une formulation 2-en-1 anti-corrosion et anti-dépôt de minéraux

Les formulations anti-corrosion testées sont les suivantes :

- Formulation de référence R1: formulation anti-corrosion et anti-dépôt, comprenant :

| | |
|---|---|
| ◦ Norust® 740 (CECA S.A.) : | 9% |
| ◦ Inipol® AD 425C (Anti-dépôt minéral CECA S.A.): | 18% |
| ◦ Noramox® C11 (CECA S.A.) : | 12% |
| ◦ Acide thioglycolique (ARKEMA France) : | 5% |
| ◦ Solvant glycolique : | q.s.p. 100% |

- Formulation comparative C1 : formulation R1 à laquelle ont été ajoutés 2% en poids, par rapport au poids total de la formulation, de mono-éthanolamine de la société VWR.
- Formulation selon l'invention Inv1 : formulation R1 à laquelle ont été ajoutés 3% en poids, par rapport au poids total de la formulation, de 1,3,5-triméthylhexahydrotriazine de la société Taminco, à 42% dans l'eau, soit environ 1,3% de produit pur.

Les quantités d'$H_2S$ dégagées (Q-$H_2S$) après stockage à 60°C pendant 8 jours sont présentées dans le tableau 1 suivant :

**-- Tableau 1 --**

| | *R1* | *C1* | *Inv1* |
|---|---|---|---|
| ***Q-$H_2S$ (ppm)*** | >> 2000 | > 1000 | 2 |

Ces résultats montrent clairement qu'une formulation inhibitrice de corrosion contenant de l'acide thioglycolique (ajouté pour augmenter l'efficacité anti-corrosion) est instable et dégage une quantité importante d'$H_2S$.

L'ajout de mono-éthanolamine à la formulation inhibitrice de corrosion de référence R1 comprenant de l'acide

thioglycolique permet de réduire la quantité d'$H_2S$ dégagé. Cette quantité reste toutefois élevée et n'est pas acceptable en raison de la forte toxicité de l'$H_2S$. En revanche, l'addition d'un composé comportant un motif triazine permet de réduire drastiquement la quantité d'$H_2S$ dégagée, à des teneurs voisines de zéro.

Les résultats de l'étude d'efficacité anti corrosion des formulations 2-en1 sont présentés sur le graphique de la Figure 1, où :

- ▲ représente les valeurs mesurées avec la formulation de référence R1, et
- • représente les valeurs mesurées avec la formulation selon l'invention Inv1.

Ces résultats montrent de manière surprenante que l'ajout d'un composé porteur d'un motif triazine, pour stabiliser la formulation, non seulement ne perturbe pas l'efficacité anti-corrosion de la même composition, ne comportant pas ledit agent stabilisant, mais également augmente encore cette efficacité anti-corrosion.

**Exemple 2 :** Tests basés sur des formulations uniquement inhibitrices de corrosion

Les formulations anti-corrosion suivantes sont testées :

- Formulation de référence R2 :

| | |
|---|---|
| ◦ Norust® 730 (CECA S.A.) : | 50% |
| ◦ Alkylimidazoline : | 19% |
| ◦ Acide thioglycolique (ARKEMA France) : | 5% |
| ◦ Acide acétique : | 6% |
| ◦ Eau : | 6% |
| ◦ Solvant glycolique : | q.s.p. 100% |

- Formulation comparative C2 : formulation R2 à laquelle ont été ajoutés 10% en poids de formaldéhyde de la société VWR à 30% en poids dans un mélange eau/méthanol, par rapport au poids total de la formulation.
- Formulation selon l'invention Inv2a : formulation R2 à laquelle ont été ajoutés 10% en poids, par rapport au poids total de la formulation, de 1,3,5-triméthylhexahydrotriazine de la société Taminco, à 42% dans l'eau.
- Formulation selon l'invention Inv2b : formulation R2 à laquelle ont été ajoutés 5% en poids, par rapport au poids total de la formulation, de 1,3,5-triméthylhexahydrotriazine de la société Taminco, à 42% dans l'eau, et 5% de formaldéhyde à 30% dans un mélange eau/méthanol, de la société VWR.

Les quantités d'$H_2S$ dégagées (Q-$H_2S$) après stockage à 60°C pendant 8 jours sont présentées dans le tableau 2 suivant :

**-- Tableau 2 --**

| | ***R2*** | ***C2*** | ***Inv2a*** | ***Inv2b*** |
|---|---|---|---|---|
| ***Q-$H_2S$ (ppm)*** | >> 2000 | 20 | 20 | 0 |

Comme précédemment, ces résultats montrent également que cette autre formulation inhibitrice de corrosion contenant de l'acide thioglycolique est instable et dégage une quantité importante d'$H_2S$.

Un essai de stabilisation avec du formaldéhyde (formulation C2) montre qu'il est nécessaire d'ajouter une grande quantité de ce produit, aujourd'hui considéré comme toxique.

Un autre essai (formulation Inv2b) montre que l'ajout d'une faible quantité d'aldéhyde et de composé porteur de fonction triazine à cette formulation de référence R2 conduit à une excellente stabilité, aucun dégagement gazeux d'$H_2S$ n'ayant été observé après stockage pendant 8 jours à 60°C.

Les exemples précédents montrent ainsi les très grands avantages apportés par l'ajout, dans une composition inhibitrice de corrosion, d'au moins un composé porteur d'un motif triazine, à la fois en ce qui concerne la stabilité de ladite formulation, de son absence de dégagement d'$H_2S$, de sa faible toxicité et de sa grande efficacité anti-corrosion.

## Revendications

**1.** Formulation inhibitrice de corrosion comprenant :

a) au moins une amine ou dérivé d'amine,
b) au moins un composé soufré choisi parmi les composés porteurs d'au moins un groupement -SH et d'au moins un groupement acide carboxylique (-COOH) et/ou alcool (-OH),
c) au moins un composé porteur d'au moins un motif triazine, et
d) éventuellement un solvant ou un mélange de deux ou plusieurs solvants.

**2.** Formulation selon la revendication 1, dans laquelle le composant a) est choisi parmi les amines, les amines éthoxylées, les amino-acides, les imidazolines, ainsi que leurs dérivés et leurs sels, les amines grasses, les dérivés d'amines grasses (amino-acides, amino-alcools, amido-amines, ammoniums quaternaires, les pyridines et dérivés, les quinolines et dérivés), les imidazolines substituées par au moins une chaîne grasse, les ester-amines, les éther-amines, les alkylamines, les amines oxy-alkylées, les bétaïnes et alkylbétaïnes, ainsi que les dérivés N-oxydes des amines précitées.

**3.** Formulation selon l'une quelconque des revendications 1 ou 2, dans laquelle le composant b) est choisi parmi le mercapto-éthanol, le mercapto-propanol, l'acide thioglycolique, l'acide mercaptopropionique ; l'acide thioglycolique étant tout particulièrement préféré.

**4.** Formulation selon l'une quelconque des revendications précédentes, dans laquelle le composant c) est choisi parmi les composés de formule (1) suivante :

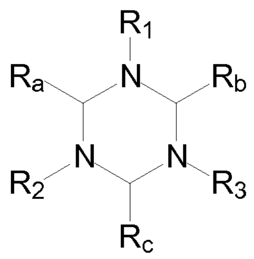

(1)

dans laquelle :

• $R_1$, $R_2$ et $R_3$, identiques ou différents, sont choisis indépendamment les uns des autres parmi l'atome d'hydrogène, un radical alkyle linéaire ou ramifié comportant de 1 à 6 atomes de carbone et éventuellement substitué par un ou plusieurs motifs choisis parmi hydroxy (-OH) et alkoxy (-OR), où R représente radical alkyle linéaire ou ramifié comportant de 1 à 6 atomes de carbone, et
• $R_a$, $R_b$ et $R_c$, identiques ou différents, sont choisis indépendamment les uns des autres parmi l'atome d'hydrogène, et un radical alkyle linéaire ou ramifié comportant de 1 à 6 atomes de carbone.

**5.** Formulation selon la revendication 4, dans laquelle le composant c) est choisi parmi les composés de formule (1) pour lesquels $R_a$, $R_b$ et $R_c$ représentent chacun l'atome d'hydrogène et $R_1$, $R_2$ et $R_3$ ne sont pas des atomes d'hydrogène.

**6.** Formulation selon la revendication 4 ou 5, dans laquelle le composant c) est choisi parmi les composés de formule (1) pour lesquels $R_1$, $R_2$ et $R_3$ sont identiques.

**7.** Formulation selon l'une quelconque des revendications 4 à 6, dans laquelle le composant c) est choisi parmi les composés de formule (1) pour lesquels $R_1$, $R_2$ et $R_3$ sont identiques et sont chacun choisis parmi le radical méthyle, le radical hydroxy-éthyle et le radical méthoxypropyle.

**8.** Formulation selon l'une quelconque des revendications précédentes, dans laquelle la quantité de composant c) est généralement comprise entre 0,5% en poids et 10% en poids, de préférence entre 0,5% et 5% en poids, par exemple environ 2% en poids, par rapport au poids total de la formulation.

**9.** Utilisation d'au moins un composé comportant au moins un motif triazine, comme stabilisant et additif pour améliorer les performances anti-corrosion, d'une formulation inhibitrice de corrosion selon l'une quelconque des revendications 1 à 8.

**10.** Utilisation selon la revendication 9, dans laquelle le composé comportant au moins un motif triazine répond à la formule (1) telle que définie dans l'une quelconque des revendications 4 à 7.

**11.** Utilisation d'une formulation inhibitrice de corrosion selon l'une quelconque des revendications 1 à 8 pour le traitement, avantageusement le traitement préventif, de la corrosion des conduites métalliques corrodables au contact de milieux corrosifs dans l'industrie pétrolière, gazière et minière.

## Patentansprüche

**1.** Korrosionsinhibierende Formulierung, umfassend:

a) mindestens ein Amin oder Aminderivat,
b) mindestens eine Schwefelverbindung, die aus Verbindungen mit mindestens einer -SH-Gruppe und mindestens einer Carbonsäuregruppe (-COOH) und/oder Alkoholgruppe (-OH) ausgewählt ist,
c) mindestens eine Verbindung mit mindestens einer Triazin-Einheit und
d) gegebenenfalls ein Lösungsmittel oder eine Mischung von zwei oder mehr Lösungsmitteln.

**2.** Formulierung nach Anspruch 1, wobei die Komponente a) aus Aminen, ethoxylierten Aminen, Aminosäuren, Imidazolinen sowie Derivaten davon und Salzen davon, Fettaminen, Derivaten von Fettaminen (Aminosäuren, Aminoalkoholen, Amidoaminen, quaternären Ammoniumverbindungen, Pyridinen und Derivaten, Chinolinen und Derivaten), durch mindestens eine Fettkette substituierten Imidazolinen, Esteraminen, Etheraminen, Alkylaminen, oxyalkylierten Aminen, Betainen und Alkylbetainen sowie N-Oxid-Derivaten der vorstehend genannten Amine ausgewählt ist.

**3.** Formulierung nach Anspruch 1 oder 2, wobei die Komponente b) aus Mercaptoethanol, Mercapto-propanol, Thioglykolsäure und Mercaptopropionsäure ausgewählt ist, wobei Thioglykolsäure ganz besonders bevorzugt ist.

**4.** Formulierung nach einem der vorhergehenden Ansprüche, wobei die Komponente c) aus den Verbindungen der folgenden Formel (1) ausgewählt ist:

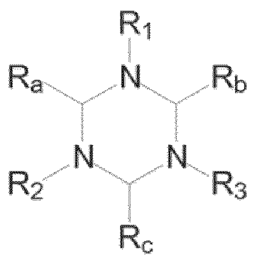

(1)

in der:

• $R_1$, $R_2$ und $R_3$ gleich oder verschieden sind und unabhängig voneinander aus einem Wasserstoffatom und einem linearen oder verzweigten Alkylrest mit 1 bis 6 Kohlenstoffatomen, der gegebenenfalls durch eine oder mehrere Einheiten, die aus Hydroxy (-OH) und Alkoxy (-OR) ausgewählt sind, substituiert ist, ausgewählt sind, wobei R für einen linearen oder verzweigten Alkylrest mit 1 bis 6 Kohlenstoffatomen steht, und
• $R_a$, $R_b$ und $R_c$ gleich oder verschieden sind und unabhängig voneinander aus einem Wasserstoffatom und einem linearen oder verzweigten Alkylrest mit 1 bis 6 Kohlenstoffatomen ausgewählt sind.

**5.** Formulierung nach Anspruch 4, wobei die Komponente c) aus den Verbindungen der Formel (1) ausgewählt ist, für die $R_a$, $R_b$ und $R_c$ jeweils für ein Wasserstoffatom stehen und $R_1$, $R_2$ und $R_3$ nicht für Wasserstoffatome stehen.

**6.** Formulierung nach Anspruch 4 oder 5, wobei die Komponente c) aus den Verbindungen der Formel (1) ausgewählt ist, für die $R_1$, $R_2$ und $R_3$ gleich sind.

**7.** Formulierung nach einem der Ansprüche 4 bis 6, wobei die Komponente c) aus den Verbindungen der Formel (1) ausgewählt ist, für die $R_1$, $R_2$ und $R_3$ gleich sind und jeweils aus einem Methylrest, einem Hydroxyethylrest und

einem Methoxypropylrest ausgewählt sind.

**8.** Formulierung nach einem der vorhergehenden Ansprüche, wobei die Menge von Komponente c) im Allgemeinen zwischen 0,5 Gew.-% und 10 Gew.-% und vorzugsweise zwischen 0,5 Gew.-% und 5 Gew.-%, beispielsweise bei ungefähr 2 Gew.-%, bezogen auf das Gesamtgewicht der Formulierung, liegt.

**9.** Verwendung mindestens einer Verbindung mit mindestens einer Triazin-Einheit als Stabilisator und Additiv zur Verbesserung der Antikorrosionsleistung einer korrosionsinhibierenden Formulierung nach einem der Ansprüche 1 bis 8.

**10.** Verwendung nach Anspruch 9, wobei die Verbindung mit mindestens einer Triazin-Einheit der Formel (1) gemäß einem der Ansprüche 4 bis 7 entspricht.

**11.** Verwendung einer korrosionsinhibierenden Formulierung nach einem der Ansprüche 1 bis 8 zur Behandlung, vorzugsweise zur präventiven Behandlung, der Korrosion von Metallleitungen, die bei Kontakt mit korrosiven Medien korrodierbar sind, in der Öl-, Gas- und Bergbauindustrie.

## Claims

**1.** Corrosion-inhibiting formulation comprising:

a) at least one amine or amine derivative,
b) at least one sulfur compound chosen from compounds bearing at least one -SH group and at least one carboxylic acid (COOH) and/or alcohol (OH) group,
c) at least one compound bearing at least one triazine unit, and
d) optionally a solvent or a mixture of two or more solvents.

**2.** Formulation according to Claim 1, in which component a) is chosen from amines, ethoxylated amines, amino acids, imidazolines, and also derivatives thereof and salts thereof, fatty amines, fatty amine derivatives (amino acids, amino alcohols, amidoamines, quaternary ammoniums, pyridines and derivatives, quinolines and derivatives), imidazolines substituted with at least one fatty chain, ester amines, ether amines, alkylamines, oxy-alkylated amines, betaines and alkylbetaines, and also N-oxide derivatives of the abovementioned amines.

**3.** Formulation according to either one of Claims 1 and 2, in which component b) is chosen from mercaptoethanol, mercaptopropanol, thioglycolic acid, mercaptopropionic acid; thioglycolic acid being most particularly preferred.

**4.** Formulation according to any one of the preceding claims, in which component c) is chosen from the compounds of formula (1) below:

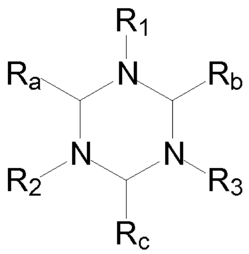

(1)

in which:

• R1, R2 and R3, which may be identical or different, are chosen, independently of each other, from a hydrogen atom, a linear or branched alkyl radical comprising from 1 to 6 carbon atoms and optionally substituted with one or more units chosen from hydroxyl (OH) and alkoxy ( OR), where R represents a linear or branched alkyl radical comprising from 1 to 6 carbon atoms, and
• Ra, Rb and Rc, which may be identical or different, are chosen, independently of each other, from a hydrogen atom and a linear or branched alkyl radical comprising from 1 to 6 carbon atoms.

5. Formulation according to Claim 4, in which component c) is chosen from the compounds of formula (1) for which Ra, Rb and Rc each represent a hydrogen atom and R1, R2 and R3 are not hydrogen atoms.

6. Formulation according to Claim 4 or 5, in which component c) is chosen from the compounds of formula (1) for which R1, R2 and R3 are identical.

7. Formulation according to any one of Claims 4 to 6, in which component (c) is chosen from the compounds of formula (1) for which R1, R2 and R3 are identical and are each chosen from a methyl radical, a hydroxyethyl radical and a methoxypropyl radical.

8. Formulation according to any one of the preceding claims, in which the amount of component c) is generally between 0.5% by weight and 10% by weight, preferably between 0.5% and 5% by weight, for example about 2% by weight, relative to the total weight of the formulation.

9. Use of at least one compound comprising at least one triazine unit, as a stabilizer and additive for improving the anticorrosion performance of a corrosion-inhibiting formulation according to any one of Claims 1 to 8.

10. Use according to Claim 9, in which the compound comprising at least one triazine unit corresponds to formula (1) as defined in any one of Claims 4 to 7.

11. Use of a corrosion-inhibiting formulation according to any one of Claims 1 to 8 for treating, advantageously preventively treating, the corrosion of metal conduits that are corrodable on contact with corrosive media in the oil, gas and mining industry.

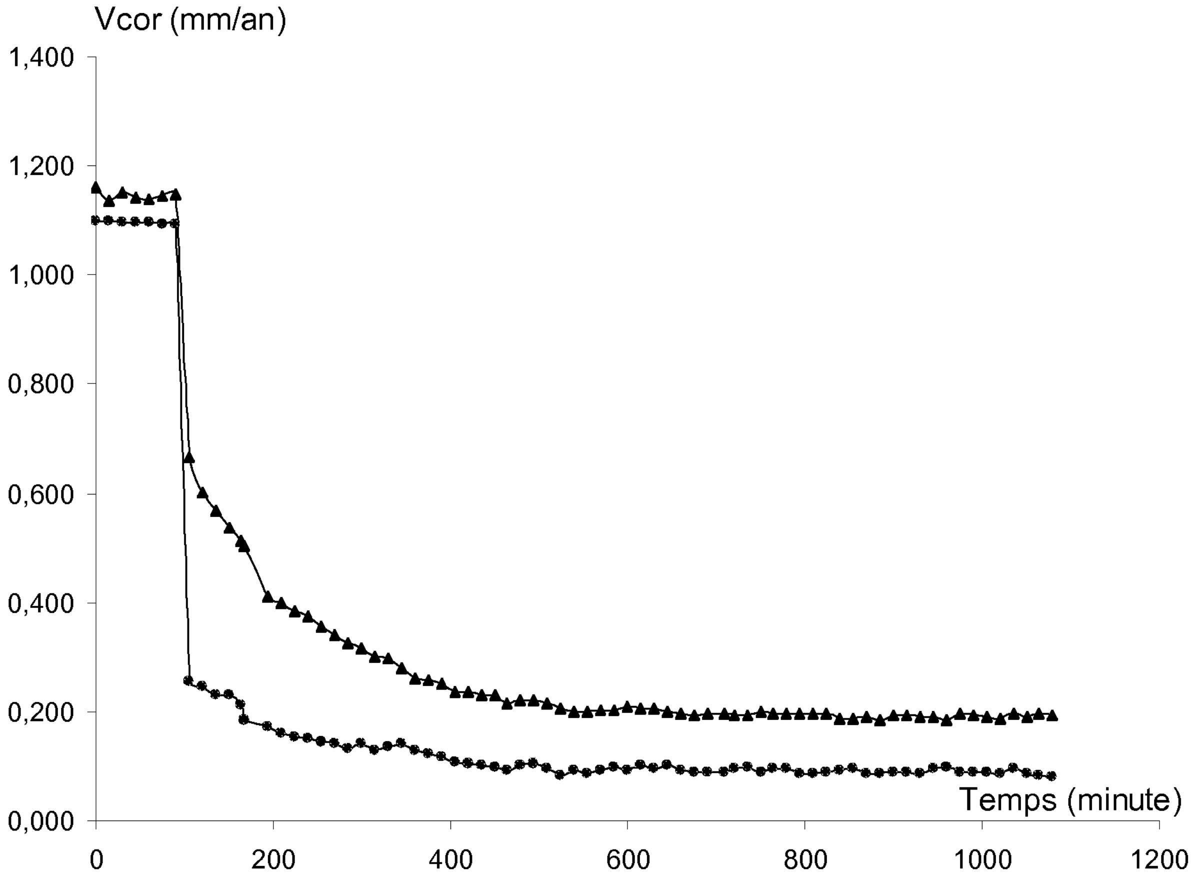
Vcor (mm/an)
1,400
1,200
1,000
0,800
0,600
0,400
0,200
0,000
0
200
400
600
800
1000
1200
Temps (minute)

**-- *Figure 1* --**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description

- WO 1998041673 A
- WO 2013034846 A
- WO 2013038100 A
- US 2010261623 A
- US 5744024 A
- EP 2267098 A
- US 5554349 A
- US 4978512 A
- US 5853619 A
- WO 200112878 A
- WO 2010031963 A
- US 4498997 A